# EUROPÄISCHE PATENTANMELDUNG

(11) **EP 2 169 461 A2**
(43) Veröffentlichungstag der Anmeldung: **31.03.2010**
(21) Anmeldenummer: 09165416.0
(22) Anmeldetag: 14.07.2009
(51) Int. Cl.: G03B 15/00, G05B 19/418, G06T 7/00, H05K 13/00

(54) **Verfahren zum Vermessen und Inspizieren von Objekten mittels eines Bildverarbeitungssystems**

(30) Priorität: 04.09.2008 DE 102008045928
(71) Anmelder: Siemens Electronics Assembly Systems GmbH & Co. KG, 81379 München (DE)
(72) Erfinder: Schnekenburger, Thomas, 86415, Mering (DE)
(74) Vertreter: Maier, Daniel Oliver

(57) **Zusammenfassung**

Die vorliegende Erfindung betrifft ein Verfahren zum Vermessen und Inspizieren von Objekten (BE), insbesondere von elektronischen Bauelementen in Bestückautomaten, mittels eines Bildverarbeitungssystems. Dabei wird für ein zu vermessendes Objekt (BE) ein geometrisches Modell (MOD) erstellt (1), durch welches eine äußere Erscheinungsform des Objekts (BE) mittels Merkmalgruppen (MG1, MG2, MG3) - wie z.B. Ecken, Kanten, Anzahl und/oder Positionen von Anschlüssen oder Anschlussreihen (AR1, AR2), Beinchen, Zentrierstiften (ZS), etc. - beschreiben wird. Zusätzlich zum geometrischen Modell (MOD) wird ein Messablauf (MA) definiert (2), wobei dieser Messablauf (MA) zumindest zwei Messschritte (MS1, MS2) umfasst. Jeder Messschritt (MS1, MS2) weist dabei Bezug auf zumindest eine Bildaufnahme (BA1, BA2) des Objekts (BE) und zumindest eine Merkmalsgruppe (MG1, MG2, MG3) des Objekts (BE) auf. Optional kann sich ein Messschritt (MS1, MS2) des Messablaufs (MA) auch auf zumindest ein Ergebnis (ERG1, ERG2) von zumindest einem vorangegangenen Messschritt (MS1, MS2) beziehen. Da der Ablauf der Vermessung und Inspektion des Objekts (BE) durch den Messablauf (MA) und damit getrennt vom geometrischen Modell (MOD) beschrieben wird, können auf einfache Weise komplexe Messabläufe (MA) definiert werden, von welchen gegebenenfalls auch auf Ergebnisse von vorangegangenen Messschritten (MS1, MS2) zugegriffen werden kann. Damit können rasch und flexibel Anpassungen an neue Anforderungen beim Vermessen von Objekten (BE), insbesondere Bauelementen, vorgenommen werden.

## Beschreibung

### Technisches Gebiet

Die vorliegende Erfindung betrifft ein Verfahren zum Vermessen und Inspizieren von Objekten, insbesondere von elektronischen Bauelementen in Bestückautomaten, mittels eines Bildverarbeitungssystems, wobei für die zu vermessenden und inspizierenden Objekte geometrische Modelle erstellt werden. Die Objekte weisen unterschiedliche Merkmalsgruppen auf (z.B. Ecken, Kanten, Anschlüsse, Markierungen, Zentrierstifte, etc. bei elektronischen Bauelementen), welche dann vom jeweiligen geometrischen Modell beschrieben werden. Die Merkmalsgruppen verfügen allerdings über unterschiedliche Eigenschaften und weisen damit unterschiedliche Mess-anforderungen auf.

### Stand der Technik

Bei einer Bestückung von Bauelementeträgern (z.B. Leiterplatten) mit Bauelementen werden so genannte Bestückautomaten eingesetzt. Die Bauelemente werden dabei üblicherweise von einer Bauelemente-Zuführeinrichtung an bestimmten Abholpositionen bereitgestellt und von dort von einem Bestückkopf abgeholt. Der Bestückkopf kann mittels eines Positioniersystems innerhalb eines Arbeitsbereichs frei positioniert werden. Nach dem Abholen werden die Bauelemente vom Bestückkopf zu einer Bestückposition transportiert und auf dem zu bestückenden Bauelementträger an vorgegebenen Einbaupositionen aufgesetzt, welche durch entsprechende elektrische Anschlussflächen definiert sind.

Aufgrund der zunehmenden Miniaturisierung von elektronischen Bauelementen ist ein präziser Bestückvorgang nur durch eine genaue Vermessung und Inspektion der vom Bestückkopf aufgenommenen Objekte bzw. Bauelemente möglich. Dabei weisen die Objekte bzw. Bauelemente Merkmale bzw. Merkmalsgruppen (z.B. Ecken, Kanten, Bauelementanschlüsse, Zentrierstifte, Markierungen, etc.) auf, von welchen Aufschluss über Typ und Lage bzw. Position des Bauelements gegeben wird.

Für ein Vermessung und Inspektion von Objekten, insbesondere Bauelementen, in Bestückautomaten werden üblicherweise Bildverarbeitungssysteme eingesetzt. Dabei wird zum Vermessen und Inspizieren das Objekt bzw. das elektronische Bauelement, das von einem Bestückkopf aufgenommen wurde, vom Bestückkopf oder von einer entsprechenden Haltevorrichtung relativ zu einer Kamera (z.B. Bauelement-Kamera) des Bildverarbeitungssystems derart positioniert, dass sich das zu vermessenden und inspizierende Objekt im Gesichtsfeld der Kamera befindet. Die eigentliche Vermessung und Inspektion - und damit auch das Erkennen des Objekts bzw. Bauelements sowie seiner Position - erfolgt dann mittels Bildverarbeitungsprozessen durch das Bildverarbeitungssystem.

Für eine genaue und robuste - d.h. wenig fehleranfällige - Erkennung und Vermessung von Bauelementen in Bestückautomaten ist es üblich, die Geometrie eines Objekts wie z.B. eines elektronischen Bauelements detailliert in einem so genannten geometrischen Modell zu beschreiben. Vom Bildverarbeitungssystem wird dieses geometrische Modell dann zum Erkennen, Vermessen und Inspizieren von Bauelementen verwendet, um beispielsweise relative Positionen der Merkmalsgruppe (z.B. Ecken, Kanten, Anschlussfüße, Anschlusskugeln, Zentrierstiften, etc.) in einer Vielzahl von einzelnen Schritten bzw. Bildaufnahmen zu ermitteln und dadurch einen sicheren und präzisen Bestückvorgang zu gewährleisten.

Allerdings weisen die einzelnen Merkmalsgruppen (z.B. Ecken, Kanten, Anschlussfüße, Anschlusskugeln, Zentrierstiften, etc.) unterschiedliche Eigenschaften und Anforderungen für ein Vermessen und Inspizieren durch ein Bildverarbeitungssystem auf. So heben sich z.B. Zentrierstifte üblicherweise nur schlecht vom Bauteilkörper ab, wodurch ihre relative Position schwierig zu ermitteln ist. Zentrierstiften sind daher beispielsweise nur schlecht für eine Groblage-Bestimmung eines Bauelements geeignet. Andererseits kann zwar z.B. eine relative Position von Anschlussfüßen oder Anschlussreihen und damit eine Groblage eines Bauelements einfach bestimmt werden, aber diese Merkmalsgruppe ist - insbesondere aufgrund ihrer Toleranzen - für eine genaue Positionsbestimmung des Bauelements ungeeignet.

Bisher wird daher versucht, die Geometrie eines Objekts bzw. Bauelements durch das geometrische Modell derart zu beschreiben, dass das Bauelement durch die im Bestückautomaten vorgegebenen Abläufe gut verarbeitet werden kann. Einen Ansatz die unterschiedlichen Eigenschaften der Merkmals gruppen von Bauteilen bei Vermessung und Inspektion zu berücksichtigen offenbart die Schrift EP 1 282 350 B1. Dabei werden den Merkmalsgruppen wie z.B. Ecken, Kanten, Anschlussfüßen/-kugeln, Anschlussreihen, Zentrierstiften, etc. Attribute über eine Gewichtung für die Positionsbestimmung zugeordnet. So wird beispielweise bei den Anschlussfüßen eines Bauteils einer relativen Position in Längsrichtung eine geringere Gewichtung zugeordnet als einer relativen Position in Querrichtung, da z.B. die Toleranzen der Anschlussfüße in Längsrichtung größer sind. Es hat sich dabei allerdings als nachteilig erwiesen, dass die Attribute über eine Gewichtung und damit Regeln für eine Positionsbestimmung nur an die jeweilige Merkmalsgruppe gebunden sind. Damit ist es insbesondere nicht möglich, Abläufe für eine Vermessen und Inspizieren von Bauelementen bzw. eine Positionsbestimmung durch ein Bildverarbeitungssystem - wie z.B. einen sequentiellen Ablauf der Vermessung, paralleles Abarbeiten einer Messung, etc. in einem Bestückautomaten zu realisieren.

### Darstellung der Erfindung

Der Erfindung liegt daher die Aufgabe zugrunde, ein Verfahren anzugeben, durch welches auf flexible Weise komplexe Abläufe für ein Vermessen und Inspizieren von Objekten realisiert werden können.

Die Lösung dieser Aufgabe erfolgt durch ein Verfahren der eingangs angegebenen Art, wobei zusätzlich zum geometrischen Modell eines Objekts ein Messablauf definiert wird. Dabei werden vom Messablauf zumindest zwei Messschritte umfasst und jeder Messschritt bezieht sich zumindest auf eine Bildaufnahme des zu vermessenden und zu inspizierenden Objekts und auf zumindest eine Merkmalsgruppe des Objekts.

Der Hauptaspekt des erfindungsgemäß vorgeschlagenen Verfahrens besteht darin, dass zusätzlich zum geometrischen Modell eines Objekts (z.B. elektronisches Bauelement) ein Messablauf definiert wird, durch den komplexe Abläufe (z.B. sequentielles oder paralleles Abarbeiten von Messungen, etc.) für das Vermessen - wie beispielsweise von einer relativen Position einer Merkmalsgruppe - auf einfache und flexible Weise definiert werden können.

Optional kann sich außerdem ein Messschritt des Messablaufs auch auf zumindest ein Ergebnis von zumindest einem vorangegangenen Messschritt beziehen, damit können durch den Messablauf auch Ergebnisse von vorangegangenen Messschritten in eine Vermessung und Inspektionen einer bestimmten Merkmalsgruppe eines Objekts (z.B. Zentrierstift eines elektronischen Bauelements) mitberücksichtigt werden. Es ist dabei günstig, wenn dabei für jeden Messschritt des Messverlaufs definiert wird, auf welche Weise ein Vermessen und Inspizieren einer Merkmalsgruppe des Objekts bzw. Bauelements und zumindest ein Ergebnis von zumindest einem vorangegangenen Messschritt kombiniert werden können. Dadurch können beispielsweise Positionen von schwerer zu findenden Merkgruppen wie z.B. von Zentrierstiften, welche sich beispielsweise nur geringfügig von der Oberfläche eines Bauelements abheben, rascher gefunden oder z.B. ein zu vermessendes Bauelement rascher erkannt werden.

Es ist günstig, wenn in einem Messschritt des Messverlaufs zumindest eine Merkmalsgruppe eines Objekts (z.B. Anschlussfüße, Anschlussreihen, etc.) vermessen und inspiziert wird. Das Ergebnis dieses Messschritts kann dann idealerweise in zumindest einem nachfolgenden Messschritt des Messverlaufs verwendet werden. So können beispielsweise zuerst Anschlussfüße oder Anschlussreihen vermessen werden, deren Position z.B. in der Bildaufnahme des Bildverarbeitungssystems leicht ermittelbar sind. In einem weiteren Messschritt wird dann beispielsweise die ermittelte Position der Anschlussfüße oder Anschlussreihe genutzt, um auf einfache und rasche Weise z.B. die Position von Zentrierstiften auf dem Bauelement zu bestimmen.

Eine zweckmäßige Weiterbildung des erfindungsgemäßen Verfahrens sieht dabei vor, dass der Messablauf als gesondertes Datenmodell gespeichert und getrennt vom geometrischen Modell des Objekts verwaltet wird. Dadurch sind wesentliche komplexere Abläufe für ein Vermessen und Inspizieren von Objekten definierbar und es können rasch Anpassungen von Messabläufen z.B. aufgrund von Kundenanforderungen durchgeführt werden. Außerdem besteht auch die Möglichkeit, spezielle Abläufe beispielsweise kundenspezifisch oder für spezielle Bauelemente zu definieren.

Es ist vorteilhaft, wenn eine Gewichtung der Merkmalsgruppen des Objekts im Messablauf hinterlegt wird, da auf diese Weise einfach Änderungen oder Anpassungen durchgeführt werden können. Dabei ist es günstig, wenn als zu vermessende Merkmalsgruppen der Objekte geometrische Abmessungen, Ecken, Kanten, Anzahl und/oder Positionen von einzelnen Anschlüssen und/oder Anschlussreihen, Positionen von Zentrierstiften und/oder Positionen von so genannten Pin-Markierungen verwendet werden.

Zweckmäßigerweise werden für unterschiedliche Typen von Bildverarbeitungssystemen bzw. Sensoren (z.B. Kamera, Zeilenkamera, Scanner, etc.) unterschiedliche, für das jeweilige Bildverarbeitungssystem geeignete Messverläufe hinterlegt und verwendet. Dadurch kann das erfindungsgemäße Verfahren rasch und flexibel an die Gegebenheiten des jeweiligen Bestückautomaten bzw. an das verwendete Bildverarbeitungssystem angepasst werden.

### Kurzbeschreibung der Zeichnung

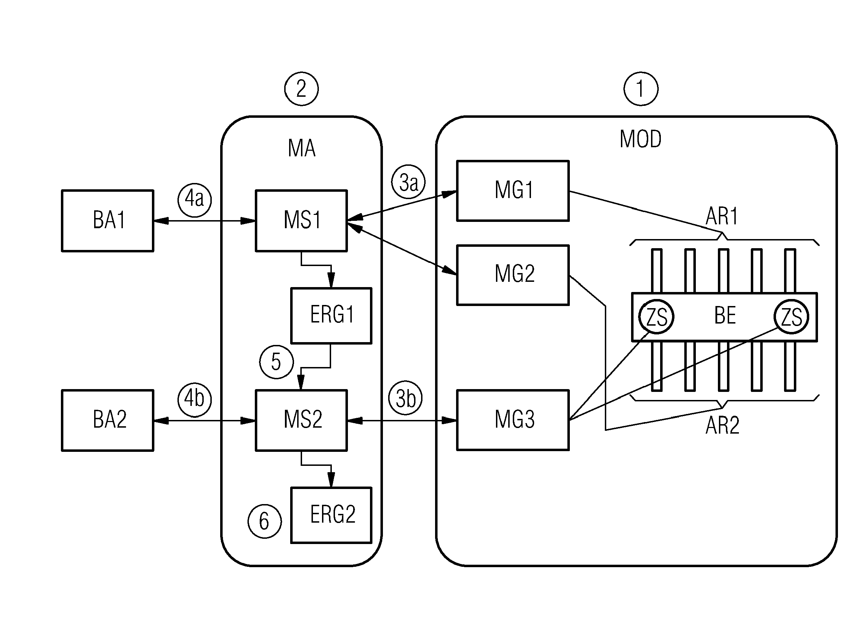

Die Erfindung wird nachfolgend in beispielhafter Weise anhand der beigefügten Figur 1 erläutert, von welcher in schematischer Weise der Ablauf des Verfahrens zum Vermessen und Inspizieren von Objekten, insbesondere von elektronischen Bauelementen in Bestückautomaten, gezeigt wird.

### Ausführung der Erfindung

Figur 1 zeigt in beispielhafter und schematischer Weise ein geometrisches Modell MOD für ein elektronisches Bauelement BE, welches in einem ersten Schritt 1 erstellt und von einem Bildverarbeitungssystem in einem Bestückautomaten z.B. Erkennen, Vermessen etc. eines Objekts verwendet wird. Vom geometrischen Modell MOD wird das elektronische Bauelement BE anhand von beispielhaften Merkmalsgruppen MG1, MG2 und MG3 beschrieben, wobei vom geometrischen Modell MOD einen Teilbereich des Bauelements BE oder das gesamte Bauelement BE beschrieben werden kann. Die Merkmalgruppen MG1, MG2, MG3 umfassen dabei z.B. Bauelement-Merkmale und/oder relative Positionen dieser Bauelement-Merkmalen wie z.B. Anschlussfüße, Anschlussreihen AR1, AR2, Bauelementanschlusskugeln, Ecken und/oder Kanten des Bauelements BE, Zentrierstiften ZS, etc.

In Figur 1 wird das beispielhafte Bauelement BE im geometrischen Modell MOD anhand von Anschlussreihen AR1, AR2 und Zentrierstiften ZS bzw. ihrer relativen Positionen beschrieben. Dabei umfassen die Merkmalsgruppen MG1 und MG2 die jeweiligen Anschlussreihen AR1 und AR2 der Bauelements BE bzw. deren Position. Die Merkmalsgruppe MG3 beschreibt die Zentrierstifte ZS bzw. deren Position und Anzahl. Natürlich kann das geometrische Modell MOD mehr als die beispielhaften Merkmalsgruppen MG1, MG2, MG3 umfassen, um ein Bauelement BE detailliert für Vermessung und Inspektion zu beschreiben.

In einem zweiten Schritt 2 wird zusätzlich zum geometrischen Modell MOD ein Messablauf MA definiert, in welchem zumindest zwei oder mehr Messschritte MS1, MS2 festgelegt sind. Der Messablauf MA wird dabei als vom geometrischen Modell MOD getrenntes Datenmodell gespeichert und verwaltet. Im Messablauf MA bzw. durch die Messschritte MS1, MS2 können unterschiedliche Eigenschaften und Mess-Anforderungen von Merkmalsgruppen MG1, MG2, MG3 berücksichtigt werden. So sind z.B. Anschlussreihen AR1, AR2 leichter mittels Bildverarbeitungssystem zu erkennen als Zentrierstifte ZS, welche sich nur schlecht vom Körper des Bauelements BE optisch abheben. Es kann ebenfalls notwendig sein, dass für ein Vermessen von bestimmten Merkmalsgruppen MG1, MG2, MG3 (z.B. Markierungen) unterschiedliche Beleuchtungswerte eingesetzt und damit mehrere Bildaufnahmen BA1, BA2 für diese Merkmalsgruppe MG1, MG2, MG3 generiert werden müssen. Es besteht sogar die Möglichkeit mehrere Messabläufe für z.B. unterschiedliche Bildverarbeitungssysteme bei Bestückautomaten zu definieren.

In einem dritten Schritt 3a und 3b wird für jeden Messschritt MS1, MS2 ein Bezug zu zumindest einer Merkmalsgruppe MG1, MG2, MG3 des geometrischen Modells MOD des Bauelements BE hergestellt.

In einem weiteren vierten Schritt 4a, 4b wird zwischen zumindest einer Bildaufnahme BA1, BA2 des Bauelements BE oder einer Merkmalsgruppe MG1, MG2, MG3 und einem oder mehreren Messschritten MS1, MS2 des Messablaufs ein Bezug hergestellt. Die Bildaufnahmen BA1, BA2 werden dabei beispielsweise mit einer Kamera oder einem Scanner des Bildverarbeitungssystems erstellt. Dabei können einem Messschritt MS1, MS2 auch mehrere Bildaufnahmen BA1, BA2, welche zum Vermessen und Inspizieren des Bauelements BE oder einer bestimmten Merkmalsgruppe MG1, MG2, MG3 notwendig sind, zugewiesen werden.

Weiters besteht optional die Möglichkeit, in einem fünften Schritt 5 festzulegen, dass von einem Messschritt MS1, MS2 zumindest ein Ergebnis ERG1, ERG2 von zumindest einem vorangegangenen Messschritt MS1, MS2 verwendet wird, um in einem sechsten Schritt 6 ein Ergebnis ERG1, ERG2 erzielen.

Im vorliegenden schematischen Beispiel gemäß Figur 1 werden im ersten Teil des dritten Schritts 3a zwischen einem ersten Messschritt MS1 des Messablaufs MA und den Merkmalsgruppen MG1 und MG2, von denen die Anschlussreihen AR1 und AR2 des Bauelements bzw. deren relative Position beschrieben werden, ein Bezug hergestellt. Im zweiten Teil des dritten Schritt 3b wird zwischen einem zweiten Messschritt MS2 des Messablaufs MA und der Merkmalsgruppe MG3, von welcher die Zentrierstifte ZS bzw. deren Position bezeichnet wird, ein Bezug hergestellt.

Im vierten Schritt 4a, 4b wird dann dem ersten Messschritt MS1 eine entsprechende erste Bildaufnahme BA1 des Bauelements BE und dem zweiten Messschritt MS2 eine entsprechende zweite Bildaufnahme BA2 zugeordnet, welche jeweils für eine Vermessen und Inspizieren des Bauelements BE notwendig sind. Zusätzlich wird beim zweiten Messschritt MS2 die optionale Möglichkeit genutzt, im fünften Schritt 5 das Ergebnis ERG1 - beispielsweise eine anhand der Merkmalsgruppen MG1, MG2 bzw. anhand der Anschlussreihen AR1, AR2 und der ersten Bildaufnahme BA1 ermittelten Groblage des Bauelements BE - zuzuordnen.

Damit kann beim Durchlaufen des Messablaufs MA zuerst im ersten Messschritt MS1 beispielsweise die relative Position der Anschlussreihen AR1, AR2 und damit die Groblage des Bauelements BE (z.B. an einer Haltevorrichtung) auf Basis der ersten Bildaufnahme BA1 bestimmt werden. Diese Groblage wird dann als Ergebnis ERG1 des ersten Messschritts MS1 beispielsweise vom zweiten Messschritt MS2 für eine Suche bzw. Bestimmung der relativen Position der Merkmalsgruppe MG3, welche die Zentrierstifte ZS beschreibt, auf Basis der zweiten Bildaufnahme BA2 verwendet. Als Ergebnis ERG2 des Messschritts MS2 wird dann z.B. die relative Position der Zentrierstifte ZS erhalten.

Ein Messablauf kann natürlich mehr als die zwei beispielhaften Messschritte MS1, MS2 umfassen. In jedem Messschritt MS1, MS2 kann auf einfache Weise festgelegt werden, wie Merkmalsgruppen MG1, MG2, MG3, Bildaufnahmen BA1, BA2 und gegebenenfalls Ergebnisse ERG1, ERG2 kombiniert werden. Eine Bildaufnahme BA1, BA2 und/oder gegebenenfalls ein Ergebnis ERG1, ERG2 eines Messschritts MS1, MS2 kann dabei von einem oder mehreren Messschritten MS1, MS2 benutzt werden. Auch können Messschritte MS1, MS2 Bezug zu einer oder mehreren Merkmalsgruppen MG1, MG2, MG3 für ein Vermessen eines Bauelements BE aufweisen.

## Patentansprüche

1. Verfahren zum Vermessen und Inspizieren von Objekten (BE), insbesondere von elektronischen Bauelementen in Bestückautomaten, mittels eines Bildverarbeitungssystems, wobei für ein zu vermessendes Objekt (BE) ein geometrisches Modell (MOD) erstellt wird (1), von welchem das Objekt (BE) in Form von Merkmalsgruppen (MG1, MG2, MG3) beschrieben wird, **dadurch gekennzeichnet, dass** zusätzlich zum geometrischen Modell (MOD) eines Objekts (BE) ein Messablauf (MA) definiert wird (2), wobei vom Messablauf (MA) zumindest zwei Messschritte (MS1, MS2) umfasst werden und jeder Messschritt (MS1, MS2) sich zumindest auf eine Bildaufnahme (BA1, BA2) des Objekts (BE) und auf zumindest eine Merkmalsgruppe (MG1, MG2, MG3) des Objekts (BE) bezieht(3a, 3b, 4, 5).

2. Verfahren nach Anspruch 1, **dadurch gekennzeichnet, dass** für zumindest einen Messschritt (MS1, MS2) des Messverlaufs (MA) definiert wird, auf welche Weise ein Vermessen einer Merkmalsgruppe (MG1, MG2, MG3) des Objekts (BE) und zumindest ein Ergebnis (ERG1) von zumindest einem vorangegangenen Messschritt (MS1) kombiniert wird (5).

3. Verfahren nach einem der Ansprüche 1 bis 2, **dadurch gekennzeichnet, dass** in einem ersten Messschritt (MS1) des Messverlaufs (MA) zumindest eine Merkmalsgruppe (MG1, MG2) eines Objekts (BE) vermessen wird und dass dann in zumindest einem nachfolgenden Messschritt (MS2) des Messverlaufs (MA) das Ergebnis (ERG1) dieses Messschritts (MS1) verwendet wird (5).

4. Verfahren nach einem der Ansprüche 1 bis 3, **dadurch gekennzeichnet, dass** der Messablauf (MA) als gesondertes Datenmodell gespeichert und getrennt vom geometrischen Modell (MOD) des Objekts (BE) verwaltet wird.

5. Verfahren nach einem der Ansprüche 1 bis 4, **dadurch gekennzeichnet, dass** eine Gewichtung der Merkmalsgruppen (MG1, MG2, MG3) des Objekts (BE) im Messablauf (MA) hinterlegt wird (2).

6. Verfahren nach einem der Ansprüche 1 bis 5, **dadurch gekennzeichnet, dass** als zu vermessende Merkmalsgruppen (MG1, MG2, MG3) von Objekten (BE) geometrische Abmessungen, Ecken, Kanten, Anzahl und/oder Positionen von einzelnen Anschlüssen und/oder Anschlussreihen (AR1, AR2), Positionen von Zentrierstiften (ZS) und/oder Positionen von so genannten Pin-Markierungen verwendet werden (1).

7. Verfahren nach einem der Ansprüche 1 bis 6, **dadurch gekennzeichnet, dass** für unterschiedliche Typen von Bildverarbeitungssystemen unterschiedliche, für das jeweilige Bildverarbeitungssystem geeignete Messverläufe (MA) hinterlegt und verwendet werden (2).
